# EUROPEAN PATENT APPLICATION

(11) **EP 4 592 019 A1**
(43) Date of publication of application: **30.07.2025**
(21) Application number: 23804881.3
(22) Date of filing: 26.05.2023
(51) Int. Cl.: B23K 26/70, B23K 26/08, B23K 26/10, B23K 26/16, B23K 26/38

(54) **TRANSPORT DEVICE FOR LASER-PROCESSED MATERIAL**

(30) Priority: 24.09.2022 JP 2022152036
(71) Applicant: Higoichi Corporation, Kamimashiki-gun, Kumamoto 861-2236 (JP)
(72) Inventor: INO, Keikichi, Kamimashiki-gun, Kumamoto 861-2236 (JP)
(74) Representative: Hasegawa, Kan
(86) International application number: PCT/JP2023/019620
(87) International publication number: WO 2024/062685

(57) **Abstract**

[Object]

To smoothly sort and convey objects separated from a plate material after laser cutting.

[Solution]

A dust collector 3 is disposed to face a laser processing head 27 of a laser processing machine 2 on a back side of a plate material W, the laser processing machine 2 performing laser processing on a plate surface of the plate material from a horizontal direction with the plate material supported in a vertical direction. A guide device 5 is provided to arrange and guide falling objects 41 that separate and fall from the plate material W due to laser processing onto a transport conveyor 4 in a state where the dust collector 3 is retracted from the position facing the laser processing head 27. The transport conveyor 4 is provided near the lower end of the plate material W. Laser-processed materials are efficiently sorted and conveyed even when a product cut out from the plate material includes a hollow opening 100.

## Description

### [Technical Field]

The present invention relates to a laser-processed material conveying device that conveys plate materials and the like that are processed by irradiating them with laser light.

### [Background Art]

When cutting a metal plate using laser light, if the workpiece is held horizontally, a large installation space is required, and a correspondingly large table is required on the processing machine side. There are drawbacks such as the need for a large number of pointed support jigs on the lower side when installing the plate material horizontally. On the other hand, processing methods are known, such as those disclosed in PTLs 1 and 2, in which the material to be processed is supported in the vertical direction.

### [Citation List]

### [Patent Literature]

PTL 1: JP 4-228282 A
PTL 2: JP 10-113787 A

### [Summary of Invention]

### [Technical Problem]

Next, when explaining the problem of the present invention, the invention of the prior art document will be explained, but the symbols used in this paragraph are applied only to the explanation in this paragraph and are not related to the explanation in subsequent paragraphs. PTL 1 discloses a device in which a flat material 15 is supported in the vertical direction, a cutting head 11 of a laser cutting device is placed close to it from one side, the material is sucked up with a grab 24 from the opposite side, which is the back side of the material, and the cut part is sucked up and removed. However, in the device of PTL 1, objects that are laser cut by the cutting head 11 and separated from the main body of the material 15 simply fall due to gravity onto a conveyor belt 17 without any guidance. Thus, the separated objects may roll on the conveyor belt and scatter irregularly, or may fall off the track and fall onto the floor. For this reason, it takes time for the workers at the end of the conveyor to sort and collect simple waste, valuable waste, product punch holes, products themselves, and the like, and it is also necessary to collect items that have fallen from the tracks. As a result, there is a drawback that the workpieces must be sorted and conveyed while temporarily stopping the laser cutting process, which is an upstream process. Furthermore, there is a risk that the separated object that falls after laser cutting will hit the separated object that has already fallen onto the conveyor belt, and the product itself may be damaged by the impact. For this reason, the use itself was limited when performing laser cutting with a material in a vertically supported state.

In addition, PTL 2 discloses a laser processing device that saves the installation floor space and prevents back scratches on the material as in PTL 1. In this device, laser cutting is performed on a plate material W while it is suspended by a material conveying device, and the product P after laser processing is moved to a product stacking step where the products P are stacked one on top of the other with the top and bottom as planes. In the device of PTL 2, if the product has a hollow opening, it is necessary to separately perform punching processing in a subsequent process, and as a result, it can only be used in the process of processing the external shape of the product. Since a product stacking device 7 for stacking the plate materials W after laser cutting in a flat state is required, the cost of the entire device increases significantly. In addition, the objects separated from materials that are not subject to external shape processing are collectively conveyed via a belt conveyor 27 that is disposed therebelow to receive the objects and are stored in a scrap box 41, but the objects are simply dropped. Thus, there was also a drawback that there was a risk that the separated objects might scatter irregularly and hit objects that had already fallen to damage the product or might fall off the conveyor track onto the floor.

In addition, processing waste, product punch holes, products themselves, and the like that could not be sucked up by the grab 24 onto the conveyor belt 17 randomly fall and flow on the conveyor. For this reason, it takes time for the workers at the end of the conveyor to sort and collect simple waste, valuable waste, product punch holes, products themselves, and the like. As a result, there was a problem that the workpieces must be sorted and conveyed while temporarily stopping the laser cutting process, which was an upstream process.

The present invention has been made in view of the above-mentioned conventional problems, and one of its objects is to provide a laser-processed material conveying device that plans the cutting process of plate materials and reliably carries out the punching process of products by providing a guide device for objects separated from a plate material after laser cutting so that falling objects can be stably received in advance. Another object of the present invention is to provide a laser-processed material conveying device that systematically drops processing waste, the punch holes of the product, the product itself, and the like that could not be sucked up during cutting onto a conveyor to significantly reduce the burden of sorting and collecting waste, valuable waste, product punch holes, products themselves, and the like in the subsequent processes. Furthermore, another object of the present invention is to provide a laser-processed material conveying device that can perform laser cutting processing smoothly and in a short time.

### [Solution to Problem]

In order to solve the above-mentioned problems, the present invention provides a laser-processed material conveying device 1 including: a plate material W supported in a vertical direction; a dust collector 3 having a dust collection head 36 disposed to face a laser processing head 27 of a laser processing machine 2 that performs laser processing on a plate surface of the plate material W from a horizontal direction with the plate material W interposed therebetween on a back side of the plate material to suck up processing waste generated by the laser processing; a transport conveyor 4 provided near a lower end of the plate W; and a guide device 5 that places and guides falling objects that separate and fall from the plate material W due to the laser processing onto the transport conveyor 4 in a state where the dust collector 3 is retracted from a position facing the laser processing head 27, the guide device 5 guiding the falling objects 41 separated and falling from the plate material W due to the laser processing toward the transport conveyor 4 in a downwardly inclined state.

At this time, the guide device 5 may include a movable guide plate 42 provided on a back side of the dust collector 3 so that a lower end thereof is swingable between a position close to the transport conveyor 4 and a position on the back side of the dust collector 3.

Furthermore, the movable guide plate 42 may include a fall guide section 46 that receives the falling object 41 that separates and falls from the plate material W due to the laser processing and guides it to fall onto the transport conveyor 4.

Further, the fall guide section 46 may include a plurality of rolling elements 47 that partially protrude from the plate surface of the movable guide plate 42.

Furthermore, the dust collector 3 may be a dust collector 3 that is placed facing the laser processing head 27 of the laser processing machine 2 with the plate material W interposed therebetween, and may be provided so as to be movable between a position OP facing the laser processing head 27 of the laser processing machine 2 and a position retracted from the laser processing opposing position OP.

### [Effect of the Invention]

According to the laser-processed material conveying device of the present invention, by providing a mechanism that stably receives objects separated from the plate materials to be laser cut on the lower side and places them on the conveyor, it is possible to transport sorted separated objects including product punched parts and products from plate materials based on advance planning, and smoothly sort and stack materials in subsequent processes.

### [Brief Description of Drawings]

[Fig. 1] Fig. 1 is a partially omitted front explanatory view of a laser-processed material conveying device according to a first embodiment of the present invention.
[Fig. 2] Fig. 2 is a view taken along line A-A in Fig. 1.
[Fig. 3] Fig. 3 is an overall perspective explanatory view of the laser-processed material conveying device in Fig. 1.
[Fig. 4] Fig. 4(a) is a laser cutting plan diagram of a plate product according to the embodiment, and Fig. 4(b) is an explanatory view showing a joint processing part of one product part.
[Fig. 5] Fig. 5 is a partially omitted perspective explanatory view of the laser-processed material conveying device in Fig. 1.
[Fig. 6] Fig. 6(a) is a schematic side explanatory view showing the guide device, and
Fig. 6(b) is a schematic side explanatory view showing the lower side of the movable guide plate.
[Fig. 7] Fig. 7 is a flowchart showing an example of a cutting plan for plate material.
[Fig. 8] Fig. 8 is a schematic perspective explanatory view of a laser-processed material conveying device according to a second embodiment of the present invention.

### [Description of Embodiments]

An embodiment of a laser-processed material conveying device of the present invention will be described below with reference to the accompanying drawings. The laser-processed material conveying device according to the present invention is a device for conveying a laser-processed material that has been cut by a laser processing machine that cuts a plate material while melting it with the thermal energy of laser light. In the present embodiment, the cutting process is performed from the horizontal direction using laser light while the plate material is supported in the vertical direction so that the surface of the plate material faces in the left-right direction.

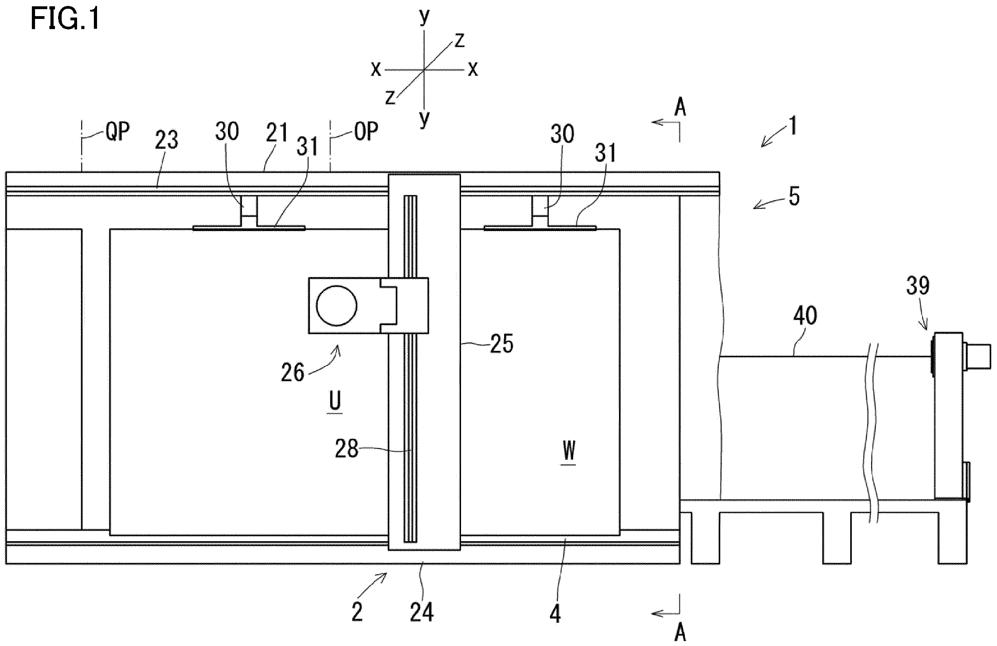

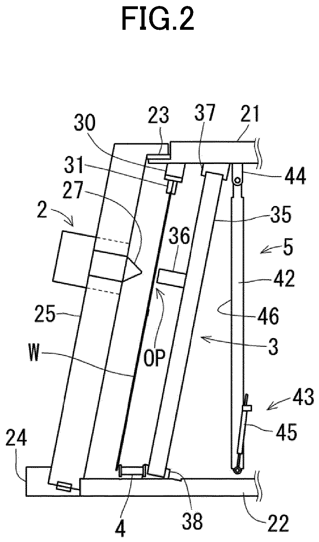

Figs. 1 and 2 schematically show a laser processing machine 2 for laser cutting a plate material W together with a laser-processed material conveying device 1 according to an embodiment of the present invention. In Figs. 1 and 2, the laser processing machine 2 includes an upper machine frame 21 and a lower machine frame 22 that are interconnected by structural members and panels (not shown), a drive stand 25 that is provided so as to be horizontally movable along guides 23 and 24 that are installed across the upper and lower machine frames, a processing head 27 of a laser device 26 mounted on the drive stand 25, and a dust collector 3.

In the present embodiment, the laser processing machine 2 is, for example, a fiber laser processing machine that amplifies the light of a specific wavelength within an optical fiber and outputs the amplified light. A fiber laser processing machine has high-quality beams, so the spot diameter can be made small, allowing for thin and deep high-speed processing, and stable processing of highly reflective materials and difficult welding materials. Moreover, because of its high energy conversion efficiency, it has the advantage of being able to produce laser light with less electricity, resulting in energy savings, and the like. However, the present invention is applicable not only to materials processed by a fiber laser processing machine but also to materials processed using a YAG laser.

In Fig. 1, a vertical guide 28 such as an LM guide is attached to the drive stand 25 extending between the upper machine frame 21 and the lower machine frame 22 so as to extend long in the vertical direction. The laser device 26 mounted on the drive stand 25 is provided so as to be movable up and down along the vertical guide 28. In Fig. 1, the laser device 26 can be driven so that its processing head 27 can be displaced around the X-axis, Y-axis, and Z-axis via a drive motor and an actuator. In this way, the plate material W is cut according to the planned cut shape and the cutting process. In the present embodiment, the object to be cut is, for example, a metal plate material, but any other material that can be cut by laser can be used.

An intermediate part sandwiched between the upper machine frame 21 and the lower machine frame 22 becomes a cutting area U where the plate material W is laser cut in a vertically supported state. The upper machine frame 21 and the lower machine frame 22 form an approximately horizontally long machine body 20 to secure cutting space. In the embodiment, objects separated from the plate material after processing are connected in a certain length toward the direction of a transport destination stacking section 39 in a state where a vertical panel 40 is erected on the machine body 20 including the upper machine frame 21 and the lower machine frame 22.

In the present embodiment, the laser-processed material conveying device 1 includes a plate material W, a dust collector 3, a transport conveyor 4, and a guide device 5. As shown in Fig. 2, in the cutting area U, the drive stand 25, the plate material W, the dust collector 3, and the guide device 5 are arranged in order toward the depth side when viewed from the front side in Fig. 1.

In Figs. 1 and 2, one or more clamping members 31 are attached to the lower surface of the upper machine frame 21 via a guide base 30. The plate material W to be processed is suspended with its upper side held by the clamping members 31. The guide base 30 is provided on the lower surface of the upper machine frame 21 to extend long in the horizontal direction in Fig. 1. The clamping member 31 is provided so as to be movable linearly (in the depth direction in Fig. 2) while being guided by the guide base. **In** the embodiment, the plate material W is held at an angle of about 10 degrees from the vertical direction (approximately 80 degrees from the ground) with the lower end side inclined toward the drive stand 25. When the laser light is incident on the plate surface of the plate material W and the plate material is cut, the cut objects fall vertically from the back side of the plate material.

The dust collector 3 is provided on the back side of the plate material W to be cut. The dust collector 3 includes a dust collector main body 35 in the form of a vertically long case, and a dust collection head 36 provided on the main body 35 and disposed at a position facing the processing head 27 so as to sandwich the plate material W therebetween. The dust collector 3 is a dust collection means that cuts the plate material W using laser light emitted from the processing head 27 of the laser device and sucks up processing waste including fumes and spatter generated during cutting from the back side of the plate material W at the same time as cutting. The dust collector 3 has the dust collection head 36 disposed near the back surface of the plate material, and is configured to move the dust collection head 36 in synchronization with the movement of the processing head 27 during processing.

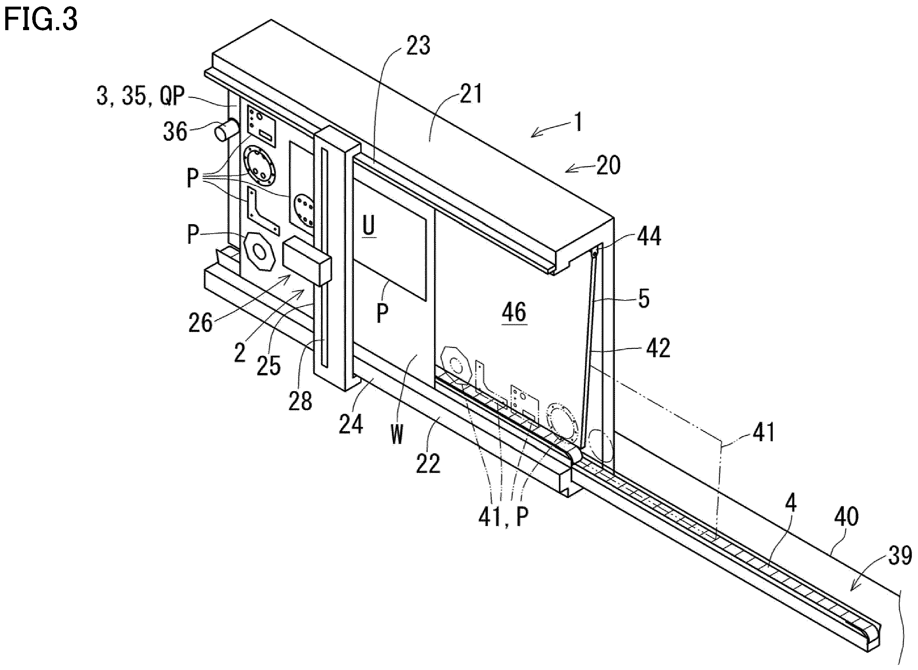

Further, the dust collector main body 35 of the dust collector 3 is provided so as to be movable in the drawing direction of Fig. 2 along the guide rails 37 and 38 attached to the lower surface of the upper machine frame 21 and the upper surface of the lower machine frame 22, respectively, via a motor and an actuator (not shown). Specifically, the dust collector main body 35 is located at a laser processing opposing position OP where the laser processing head 27 performs laser processing on the plate material and is provided so as to be movable between a position where it sucks up processing waste during cutting, and a retraction position QP (see Figs. 1 and 3) where it is retracted from the laser processing opposing position. In the embodiment, the dust collector 3 moves linearly along the guide rails 37 and 38, but the laser processing opposing position and the retraction position may be moved from any position in any direction.

In Figs. 1 to 3, the transport conveyor 4 is installed near the lower end of a plate material W that is vertically supported. The transport conveyor 4 is disposed along the longitudinal direction of the plate material W thickness and is provided along the longitudinal direction of the laser processing machine 2, as shown in Fig. 1. Further, in the embodiment, the transport conveyor 4 is extended from the machine body 20 to the subsequent process side and terminates at the stacking section 39. The vertical panel 40 is installed in the section from the machine body 20 to the stacking section 39 to assist in conveying products and the like after laser cutting.

In the figure, the guide device 5 is a guide means for arranging and guiding a falling object that separates and falls from the plate material W by laser cutting onto the transport conveyor 4, and receives the falling object in the middle of falling and places it on the transport conveyor. At this time, since the dust collector 3 follows the position opposite to the laser processing head 27 on the back side of the plate material W with the plate material W interposed therebetween, the guide device 5 is disposed at a position where the falling object after processing falls in a state where the dust collector 3 is retracted from the dust collection position.

In the embodiment, the guide device 5 guides the falling object 41 that separates and falls from the plate material W by laser processing onto the transport conveyor 4 in a downwardly inclined state. As a result, the falling object 41 can be stably received on the inclined surface, and the falling object 41 can be stably placed on the transport conveyor 4 with less impact from falling.

As shown in Figs. 2 to 6, in the present embodiment, the guide device 5 includes a movable guide plate 42 provided so that its lower side can be moved between a position close to the transport conveyor 4 and a supporting position in the vertical direction, which is on the back side of the dust collector 3. During the laser cutting process of the plate material W, since the dust collection head 36 is located at a position opposite to the processing head 27 on the back side of the plate material, the lower end of the movable guide plate 42 moves close to the transport conveyor 4 in a state where the dust collector 3 is moved laterally so as to be retracted from the position opposite to the processing head 27. The movable guide plate 42 is supported in a direction along the surface of the plate material W, or in a state where the surfaces are substantially parallel.

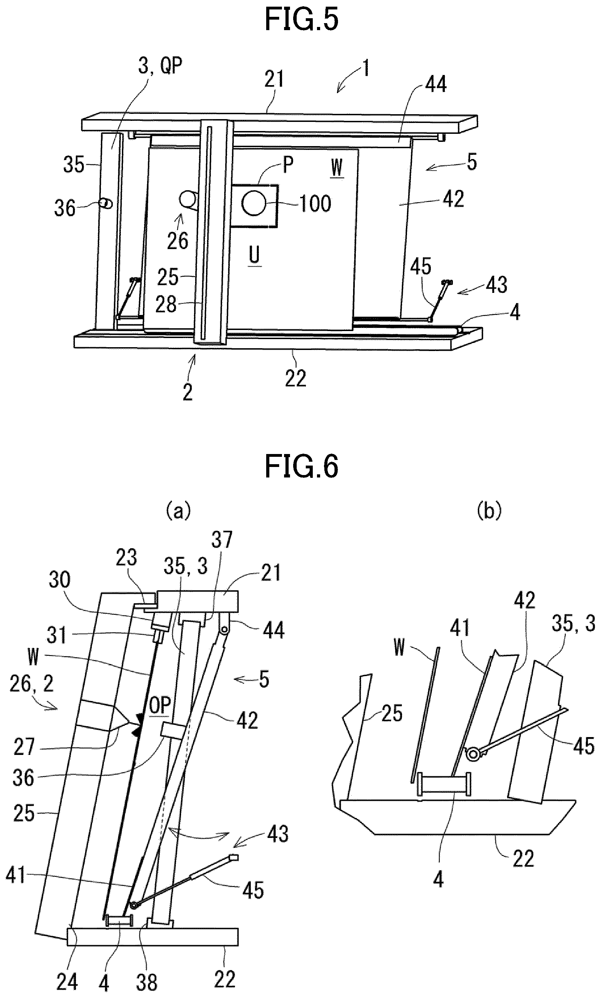

As shown in Figs. 5 and 6, in the embodiment, the lower end side of the movable guide plate 42 is supported by a swing mechanism 43 so as to be able to swing. The swing mechanism 43 includes a support bracket 44 provided on the lower surface of the upper machine frame 21, and a drive arm 45 connected to the movable guide plate 42 whose upper end is supported by the support bracket 44. The drive arm 45 includes an arm that is extendable and retractable with respect to a cylinder, the tip of the arm is pivotably supported on the lower end side of the movable guide plate 42, and the arm is driven to extend and retract via a hydraulic motor (not shown) or the like. In this way, the lower end side of the movable guide plate 42 is swingably moved between a position close to the transport conveyor and a position on the back side of the dust collector 3 when the dust collector is located on the back side of the plate material.

That is, the movable guide plate 42 has a fall guide section 46. The fall guide section 46 is a means for receiving the falling object 41 that separates and falls from the plate material by laser processing and guides it to fall onto the transport conveyor and may correspond to the entire surface of the movable guide plate 42 facing the plate material W. Note that, in reality, the lower end of the falling object 41 often hits a part from the upper side to the lower side of the movable guide plate 42 on the side facing the plate material. For example, a flexible sheet member or the like that absorbs the impact of falling may be stretched over this part. In addition, in Fig. 3, the state in which the plate materials W are cut by the processing head 27, received by the fall guide section 46 of the movable guide plate 42, guided to fall onto the conveyor 4, and then lined up and guided for conveyance is shown by imaginary lines.

Next, the operation when laser cutting and conveying a plate material using the laser-processed material conveying device of the present embodiment will be explained. In the device of the present invention, since the plate material is cut by irradiating the plate surface with laser light from the horizontal direction with the plate material being supported in the vertical direction, the objects separated from the cut plate material W fall in the vertical direction due to gravity. Conventionally, since separated objects after falling are simply dropped onto a conveyor and conveyed, the fallen separated objects may not be placed on the conveyor reliably, or the position where they fall on the conveyor or the arrangement of the separated objects was not regular. For this reason, it has not been possible to cut, sort, and stack products having hollow openings with one input of materials. In this regard, in the present invention, the guide device 5 can be expected to stably place the falling objects on the conveyor due to cutting, and to standardize the placement position or manner of placement. Thus, it is possible to convey the cut workpieces by determining the cutting order and the accompanying conveyor transport order in advance.

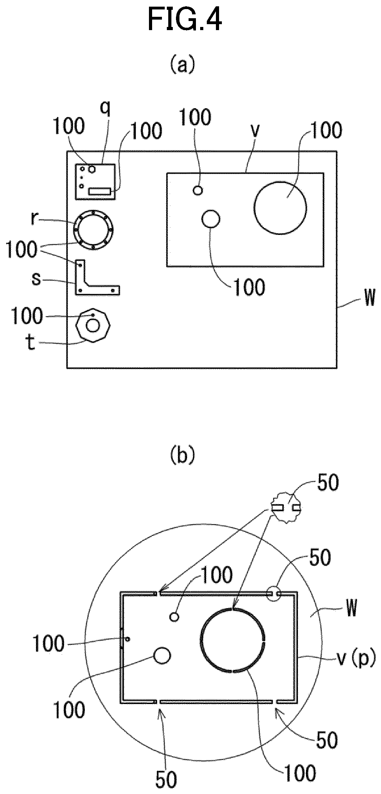

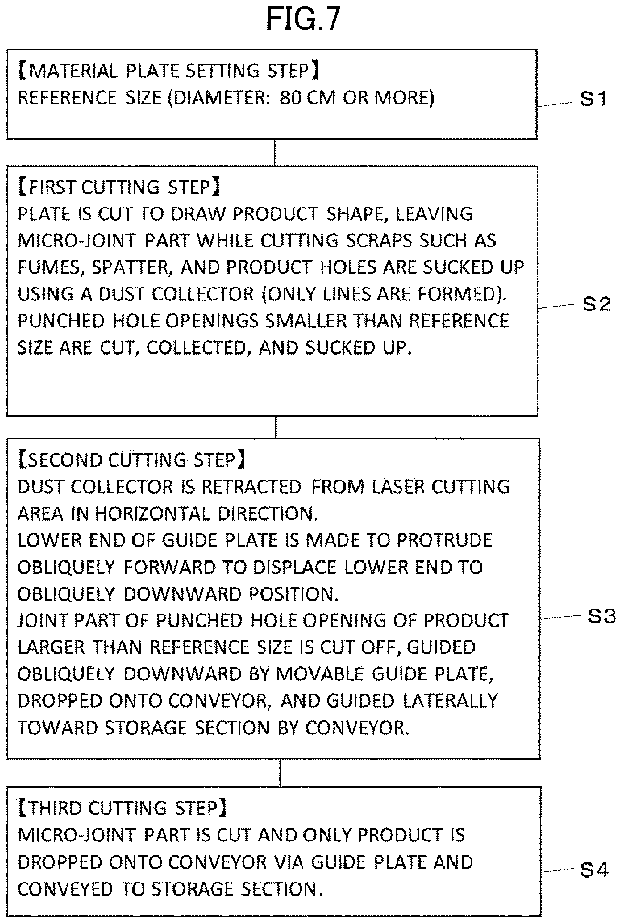

Fig. 7 shows a flowchart for laser cutting and conveying a plate material using the laser-processed material conveying device of the present embodiment. In Fig. 4(a), lines to be cut are illustrated as, for example, ruled lines. When it is desired to cut out and obtain products q, r, s, t, and v from the original plate material W to be processed, a hollow opening 100 is included in each product. When the plate material is set in a vertically supported state, the plate material W itself needs to have a size larger than the suction opening (for example, 80 mm in diameter) of the dust collection head 36, that is, the reference size (S1).

In the first cutting step, the workpiece is cut along the ruled line in Fig. 4(a) using laser light based on the cutting design. At this time, as shown in Fig. 4(b), the outline of the product P is laser cut while leaving the micro-joint part 50. On the other hand, a product hollow opening smaller than the reference size may be cut and removed at this stage. The fumes, spatter, and other processing waste of the hollow opening 100 generated during cutting, as well as the punch hole member corresponding to the hollow opening of the product, which is smaller than the suction opening of the dust collection head 36, are sucked up by the dust collection head 36 on the back side of the plate material (S2).

Next, in the second cutting step (S3), the dust collector 3 placed on the back side of the plate material W is slid along the guide rails 37 and 38 and retracted from the position facing the processing head 27 with the plate material interposed therebetween. Next, as shown in Figs. 6(a) and 6(b), the drive arm 45 of the swing mechanism 43 is driven to extend the arm from the cylinder, and the lower end side of the movable guide plate 42 of the guide device 5 is moved from a position on the back side of the dust collector to a position close to the transport conveyor 4. At this time, the movable guide plate 42 is arranged in an obliquely downwardly inclined position with its lower end facing the transport conveyor 4 from the back side of the dust collector 3. In the embodiment, at this time, the lower end of the movable guide plate 42 is placed directly above the transport conveyor 4. In this state, the micro-joint part 50 of the product hollow opening 100 larger than the reference size is cut and separated from the plate material W. In Fig. 6(a), when a separated object separated from the plate material W during laser cutting by the processing head 27 falls due to gravity, the separated object hits the midway inclined surface of the movable guide plate 42 with its surface facing left and right. The fallen separated object is guided along the inclined surface of the movable guide plate 42, slides down onto the transport conveyor 4, and lands on the conveyor conveyance surface in an obliquely standing state. In this state, the separated object is conveyed by the transport conveyor toward the workpiece stacking section 39.

After the product hollow opening larger than the reference size is separated and conveyed onto the conveyor, only the main body of the product P is held on the plate material W. Then, in the third cutting step (S4), the micro-joint part 50 of the outline of the main body of the product P shown in Fig. 4(b) is cut to separate the product P from the plate material W. Then, when the product P separated from the plate material W falls due to gravity, the separated product P hits the fall guide section 46 on the midway inclined surface part of the movable guide plate 42 with its surface facing left and right. The product P is guided to fall along the inclined surface of the movable guide plate 42, slides down onto the transport conveyor 4, and lands on the conveyor conveyance surface in an obliquely standing state. **In** this state, the separated product P is conveyed by the transport conveyor toward the workpiece stacking section 39. Note that the plate material W after completion of processing is then removed from the clamping member 31 and replaced with a new plate material as necessary.

As a result, the step (S1) of setting the plate material, the step (S2) of cutting along the ruled line while leaving the micro-joint parts and sucking up cutting waste and the hollow opening parts smaller than the reference size, the step (S3) of cutting off the micro-joint part of only the product hollow opening part and dropping the micro-joint part for transport in a state where, after the dust collector is retracted, the lower part of the movable guide plate of the guide device is moved to a position directly below the plate material near the conveyor, and the step (S4) of cutting off the micro-joint part of the product outline and conveying only the product towards the stacking section can be clearly divided, the stacking such as sorting and collection in the stacking section 39 can be performed smoothly. As a result, it is possible to eliminate waste of time such as waiting for pre-processing of laser cutting and changeover time, and realize laser cutting processing with high efficiency.

The laser processing machine 2, the dust collector 3, the transport conveyor 4, and the guide device 5 described above are each electrically connected to a control device (not shown). The attitude control, movement control, linkage control, stop, and termination of each device are controlled in an integrated manner through a control panel that includes an input/output operation unit and a display unit while coordinating the devices.

According to the laser-processed material conveying device according to the present invention described above, the laser-processed material conveying device includes: a plate material supported in a vertical direction; a dust collector having a dust collection head disposed to face a laser processing head of a laser processing machine that performs laser processing on a plate surface of the plate material from a horizontal direction with the plate material interposed therebetween on a back side of the plate material to suck up processing waste generated by the laser processing; a transport conveyor provided near a lower end of the plate; and a guide device that places and guides falling objects that separate and fall from the plate material due to the laser processing onto the transport conveyor in a state where the dust collector is retracted from a position facing the laser processing head. Therefore, it is possible to continuously perform laser cutting processing on products with large hollow openings while supporting one plate material without the need to change the plate material even for products with punched hole openings that cannot be sucked up by the dust collector. **In** addition, since operations such as conveying, sorting, and stacking after cutting can be performed smoothly, waiting time during the cutting process and the like can be eliminated, and the processing cycle time can be significantly shortened, making it possible to shorten the overall working time.

The dust collector is a dust collector that is placed facing the laser processing head of the laser processing machine with the plate interposed therebetween, and is provided so as to be movable between a position facing the laser processing head of the laser processing machine and a position retracted from the laser processing opposing position. After the dust collector located at the back side of the plate material is moved and retracted, the guide device is made to appear, and the guide device receives the separated objects of punched hole openings having a size that cannot be sucked up by the dust collection head of the dust collector. Thus, the separated objects can be placed and conveyed on the transport conveyor in an orderly manner in terms of position, posture, and the like.

**In** addition, the guide device guides the falling objects separated and falling from the plate material due to the laser processing toward the transport conveyor in a downwardly inclined state. Since objects that are separated from a plate that has been laser-cut in a vertical state fall due to gravity in the vertical state, and the contact angle with the guide device is small, they can slide obliquely and land smoothly on the transport conveyor. At this time, since the upper part of the falling object is caught at the guide device side, and it can be placed on the transport conveyor while standing upright, the falling objects do not scatter or fall on the conveyor surface, and the stability of conveyance movement and the smoothness of sorting and collection in the stacking process can be maintained.

**In** addition, the guide device includes a movable guide plate provided on a back side of the dust collector so that a lower end thereof is swingable between a position close to the transport conveyor and a position on the back side of the dust collector. Therefore, it is possible to switch between laser cutting while collecting dust and separating and conveying necessary parts and products due to cutting of micro-joint parts without collecting dust, and it is also possible to realize smooth falling and conveyance guidance of separated objects.

**In** addition, the movable guide plate includes a fall guide section that receives a falling object that separates and falls from the plate material due to the laser processing and guides it to fall onto the transport conveyor. Therefore, it is possible to receive separated objects and products that fall due to gravity, land them smoothly on the transport conveyor, and convey them stably without scattering or overlapping each other.

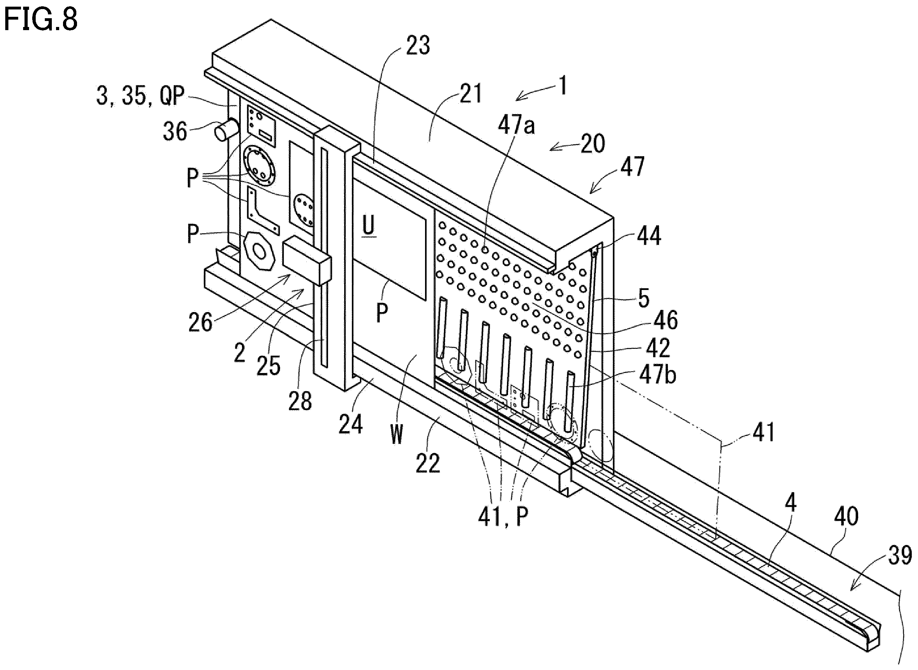

Next, a second embodiment of the present invention will be described based on Fig. 8, in which the same members as in the first embodiment are denoted by the same reference numerals, and a detailed explanation thereof will be omitted. The laser-processed material conveying device of the second embodiment differs in the configuration of the movable guide plate 42, and the other components are the same as the device of the first embodiment.

**In** the second embodiment, a plurality of rolling elements 47 are provided on the surface of the movable guide plate 42, that is, the surface facing the processing head 27, with parts of the rolling elements 47 protruding from the plate surface. **In** the embodiment, a spherical rolling element 47a is provided in a section from a substantially central part in the vertical direction to an upper part of the movable guide plate 42. **In** the embodiment, a large number of embedded so-called free-ball bearings are embedded. A free ball bearing a device that includes a ball receiving part having a hemispherical concave surface, a plurality of receiving balls arranged in the ball receiving part, and a main ball rotatably supported on the hemispherical concave surface via the plurality of receiving balls. A part of the upper part of the main ball is made to protrude from the plate surface of the movable guide plate 42. **In** the present embodiment, a plurality of rolling elements 47 are distributed over the entire upper part of the surface, and when an object separated from the plate material W hits the upper part of the movable guide plate 42 whose surface is substantially parallel to the plate material W at an acute angle, the object slides as it is and is guided downward.

Furthermore, roller-shaped rolling elements 47b are provided in a section from a substantially central part in the vertical direction to a lower part of the movable guide plate 42. **In** the embodiment, a vertically long roller that can freely roll around a vertical axis is provided in an embedded manner with a part thereof protruding from the surface. The roller-shaped rolling elements 47b can assist in conveying separated falling objects that have landed on the transport conveyor 4 in an upright state toward the stacking direction.

The laser-processed material conveying device of the present invention described above is not limited to the configuration of the above-described embodiments, and any modifications may be made without departing from the spirit of the present invention as described in the claims.

### [Industrial Applicability]

The laser-processed material conveying device of the present invention can be applied not only to metal plates but also to light metals, alloys, and other laser-processable plate materials. Further, the laser device itself is also applicable to carbon dioxide laser and YAG laser cutting processing.

### [Reference Signs List]

- W: Plate material
- OP: Laser processing opposing position
- U: Cutting area
- P: Product
- 1: Laser-processed material conveying device
- 2: Laser processing machine
- 3: Dust collector
- 4: Transport conveyor
- 5: Guide device
- 21: Upper machine frame
- 22: Lower machine frame
- 25: Drive stand
- 26: Laser device
- 27: Processing head
- 35: Dust collector main body
- 36: Dust collection head
- 39: Stacking section
- 42: Movable guide plate
- 43: Swing mechanism
- 45: Drive arm
- 46: Fall guide section
- 47: Rolling element
- 50: Micro-joint part
- 100: Hollow opening

## Claims

1. A laser-processed material conveying device comprising:
a plate material supported in a vertical direction;
a dust collector having a dust collection head disposed to face a laser processing head of a laser processing machine that performs laser processing on a plate surface of the plate material from a horizontal direction with the plate material interposed therebetween on a back side of the plate material to suck up processing waste generated by the laser processing;
a transport conveyor provided near a lower end of the plate; and
a guide device that places and guides falling objects that separate and fall from the plate material due to the laser processing onto the transport conveyor in a state where the dust collector is retracted from a position facing the laser processing head, the guide device guiding the falling objects separated and falling from the plate material due to the laser processing toward the transport conveyor in a downwardly inclined state.

2. The laser-processed material conveying device according to claim 1, wherein
the guide device includes a movable guide plate provided on a back side of the dust collector so that a lower end thereof is swingable between a position close to the transport conveyor and a position on the back side of the dust collector.

3. The laser-processed material conveying device according to claim 2, wherein
the movable guide plate includes a fall guide section that receives a falling object that separates and falls from the plate material due to the laser processing and guides it to fall onto the transport conveyor.

4. The laser-processed material conveying device according to claim 3, wherein
the fall guide section includes a plurality of rolling elements that partially protrude from the plate surface of the movable guide plate.

5. The laser-processed material conveying device according to any one of claims 1 to 4, wherein
the dust collector is a dust collector that is placed facing the laser processing head of the laser processing machine with the plate material interposed therebetween, and is provided so as to be movable between a position facing the laser processing head of the laser processing machine and a position retracted from the laser processing opposing position.
